# EUROPEAN PATENT SPECIFICATION

(11) **EP 1 882 868 B1**
(45) Date of publication and mention of the grant of the patent: **18.11.2009**
(21) Application number: 07270038.8
(22) Date of filing: 10.07.2007
(51) Int. Cl.: F16H 3/66

(54) **Automatic Transmission for motor vehicles**
Automatikgetriebe für Kraftfahrzeuge
Transmission automatique pour véhicules à moteur

(30) Priority: 27.07.2006 GB 0614914
(43) Date of publication of application: 30.01.2008
(73) Proprietor: Ford Global Technologies, LLC, Dearborn, MI 48126 (US)
(72) Inventor: Tickle, David, Leamington Spa, Warwickshire CV32 6BB (GB); Spooner, John, Kenilworth, Warwickshire CV8 1BX (GB)
(74) Representative: Potts, Susan Patricia

(56) References cited:
- EP-A- 1 491 794
- DE-A1- 4 130 223
- US-A- 3 482 469

## Description

The present invention relates to an automatic multistage transmission for a motor vehicle.

Such an automatic transmission is proposed, for example, in German Patent Application Publication No. DE 4130 223 A1.

Conventionally, a combination of transmission and transfer box are used to achieve an increased ratio spread by the addition of a low ratio range. The transfer box is usually provided with a drivers selector device in order to shift to the low range. These are usually a break in torque when shifting from low to high range and vice-versa which is inconvenient for the driver who may need to stop or slow down and may cause discomfort for the passengers. Furthermore, the use of such a transfer box may increase the packaging size.

According to a first aspect of the invention there is provided an automatic transmission for a motor vehicle, the transmission having an input shaft which is engageable with an engine, an output shaft which is engageable with at least one vehicle axle and a shifting gear train provided with several shifting elements, the shifting gear train being arranged between the input shaft and the output shaft within a housing, wherein the shifting gear train includes two Ravigneaux gear sets, designated a primary gear set and a secondary gear set respectively, each gear set having an input, a first sun gear connectable to their input, a ring gear, a first planet gear, a second planet gear, a second sun gear, a carrier for rotatably supporting the first and second planet gears and an output connected to the ring gear, the first and the second planet gears being arranged in such a way that the first planet gear is meshed with the first sun gear and the ring gear whereas the second planet gear is meshed with the first planet gear and the second sun gear, the ring gear of the secondary gear set being connected to the output shaft, the carrier of each gear set being adapted to be locked to the housing by a respective brake, each first sun gear of each gear set having a sun gear shaft which can be locked to the housing by means of another respective brake, said first sun gear of each gear set being connected with a respective forward clutch for establishing a driving ratio from the input shaft to the output shaft and an additional reverse clutch being provided to connect the input of one of the gear sets to the respective second sun gear, characterised in that the primary gear set and the secondary gear set are arranged in series within the housing with the output of the primary gear set connected to the input of the secondary gear set, each gear set being capable of providing three distinct forward ratios and one of the gear sets being capable of providing a reverse ratio and wherein the primary gear set and the secondary gear can be combined to provide three other distinct forward ratios and another reverse ratio.

The invention will now be described by way of example with reference to the accompanying drawings of which: -
FIG.1 is a schematic diagram showing a multi-speed automatic transmission according to the present invention;
FIG.2 is a shift table showing the relationship between the states of friction elements and the gear ratios established thereby in the automatic transmission shown in FIG. 1;

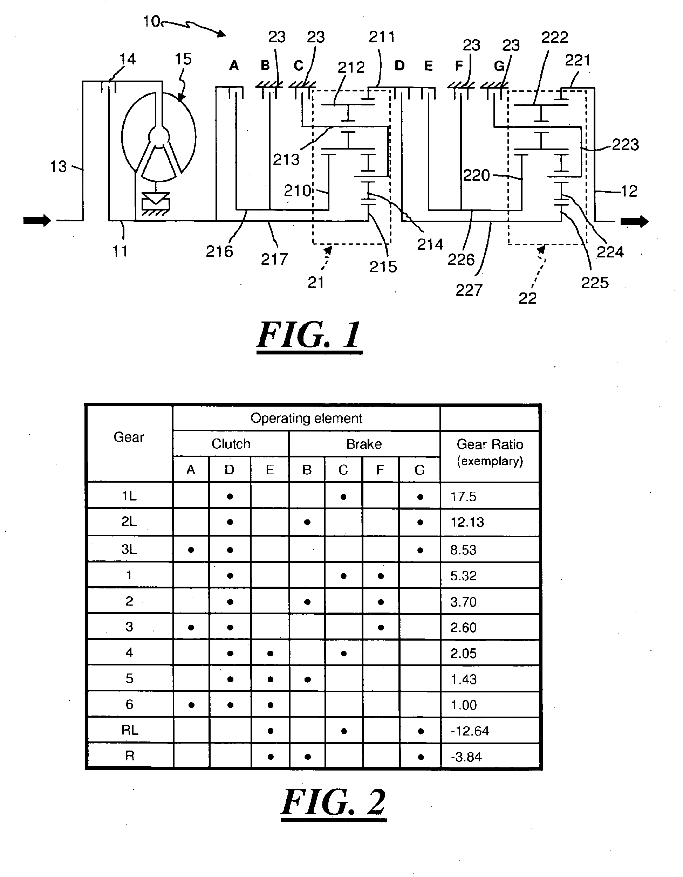

With reference to Fig.1, there is shown an automatic transmission 10 comprising an input shaft 11, an output shaft 12 and a shifting gear train arranged between the two shafts 11 and 12. The input shaft 11 is selectively connected to an engine shaft 13 by means of a clutch 14 and a torque converter 15.

The shifting gear train includes a primary gear set 21 and a secondary gear set 22 which are of the Ravigneaux double planetary gear type and arranged in series in a housing 23 and connected to one other by several shifting elements, in this example three clutches A (forward clutch), D (forward clutch) and E (reverse clutch) and four brakes B (sun brake), C (carrier brake), F (sun brake) and G (carrier brake), as it will be further explained below.

The primary gear set 21 has a first sun gear 210, a ring gear 211, a first planet gear 212, a carrier 213, a second planet gear 214 and a second sun gear 215. The first and the second planet gears 212, 214 are arranged in such a way that the first planet gear 212 is meshed with the first sun gear 210 and the ring gear 211 and the second planet gear 214 is meshed with the first planet gear 212 and the second sun gear 215, the first planet gear 212 and the second planet gear 214 meshing with each other. The carrier 213 rotatably supports the first and second planet gears 212 and 214. The carrier 213 can be locked to the housing 23 by brake C.

The first and second sun gears 210, 215 are provided with a first sun gear shaft 216 and a second sun gear shaft 217 respectively. The first sun gear shaft 216 can be either locked to the housing 23 by brake B or connected to the second sun gear shaft 217 by clutch A. As illustrated in Fig.1, the second sun gear shaft 217 is connected to the input shaft 11 forming thus an input to the primary gear set 21.

The secondary gear set 22 is similar to the first gear set 21. The second gear set 22 therefore has a first sun gear 220, a ring gear 221, a first planet gear 222, a first gear carrier 223, a second planet gear 224 and a second sun gear 225. The first and the second planet gears 222, 224 are arranged in such a way that the first planet gear 222 is meshed with the first sun gear 220 and the ring gear 221 and the second planet gear 224 is meshed with the first planet gear 222 and the second sun gear 225, the first planet gear 222 and the second planet gear 224 meshing with each other. The gear carrier 223 is rotatably supporting the first and second planet gears 222 and 224. The first gear carrier 223 can be locked to the housing 23 by brake G.

The first and second sun gears of the second gear set 220, 225 are provided with a first sun gear shaft 226 and a second sun gear shaft 227 respectively.

The ring gear 211 of the primary gear set 21 is connectable with the first sun gear 220 of the secondary gear set 22 by clutch E and also connectable with the second sun gear 225 of the secondary gear set 22 by clutch D. The ring gear 211 forms thus an input for the secondary gear set 22 and also the output of the primary gear set 21. The first sun gear shaft 226 of the secondary gear set 22 can be locked to the housing 23 by brake F.

The ring gear 221 of the secondary gear set 22 is connected to the output shaft 12.

Clutches A, D and E and brakes B, C, F and G can be operated according to the shift table shown in FIG. 2. In this table, gears 1 to 6 are forward gears which would normally be available from the D position of a conventional transmission selector while a separate range change selector is in high mode, for on-road use, "R" is a reverse gear which would normally be available from the R position of a conventional transmission selector while the separate range change selector is in High mode; 1 L to 3L are low forward ratios which would normally be selected by moving the range change selector to a Low mode for off-road use and RL is a reverse Low ratio obtained by moving the transmission selector to R while keeping the range change selector in Low mode. A black spot designates that the corresponding element is engaged, while a blank designates that the corresponding element is released. Hence, the first forward low gear 1 L is obtained by engaging clutch D and brakes C and G. Brake C is released and brake B is engaged to obtain the second forward low gear 2L. By operating the shifting element (clutches and brakes) as shown in Fig. 2 a transmission with nine forward gears and two reverse gears is obtained in which three low forward gear ratios and one reverse low gear ratio can be obtained without the need of a range-change transfer box.

Table 1 below shows examples of the number of teeth for each component of each gear set 21 and 22 in order to obtain the exemplary gear ratios shown in Fig.2.

**TABLE 1**

| **First gear set 21** | | | |
|---|---|---|---|
| | | | Teeth |
| First sun gear 210 | | | 17 |
| Second sun gear 215 | | | 39 |
| second planet 214 | | | 52 |
| First planet 212 | | | 53 |
| Ring gear 211 | | | 145 |
| | | | |

| **Second gear set 22** | | | |
|---|---|---|---|
| | | | Teeth |
| First sun gear 220 | | | 21 |
| Second sun gear 225 | | | 29 |
| second planet 224 | | | 6 |
| First planet 222 | | | 7 |
| Ring gear 221 | | | 43 |

As shown in Table 1, the two gear sets 21 and 22 are similarly arranged but provided with different sizes of suns, planets and rings so as to achieve a spread of gear ratios between -12.64:1 and 17.5:1.

It will be appreciated that Gears 1 to 6 give an even spread of forward ratios for on-road use, with gear 1 (1st gear) being low enough to enable starting in a lower ratio when towing a heavy trailer. For off-road-use, Gears 1 L to 3L give an even spread of forward ratios while RL (Reverse Low) is numerically similar to 2L to allow for a reasonable ground speed and traction off-road. Similarly, R is (Reverse) is high enough to give a reasonable road speed when reversing on-road. Furthermore, if the driveline includes a transfer box it does not need a low ratio and thus the packaging size can be improved.

Although the automatic transmission has been described with six forward gears and one reverse for on-road use and three forward gears and one reverse gear for off-road use and is thus potentially suitable for a 4x4 or other all wheel drive vehicle, it will be appreciated that with up to nine forward gears available the transmission may also be suitable for normal on-road vehicles, e.g. saloon cars, sports cars etc. where the greater number of forward ratios can optimise performance and fuel consumption. In such a case the spread of ratios would be much less, i.e. closer, and Reverse Low may be omitted.

In an alternative, the gear set 22 and the shifting elements DEFG associated could located after the torque converter 15 and the gear set 21 and the shifting elements ABC displaced in lieu of the gear set 22 and its shifting elements.

## Claims

1. An automatic transmission (10) for a motor vehicle, the transmission (10) having an input shaft (11) which is engageable with an engine, an output shaft (12) which is engageable with at least one vehicle axle and a shifting gear train provided with several shifting elements, the shifting gear train being arranged between the input shaft and the output shaft within a housing (23), wherein the shifting gear train includes two Ravigneaux gear sets, designated a primary gear set (21) and a secondary gear set (22) respectively, each gear set (21, 22) having an input (11, 211), a first sun gear (210, 220) connectable to their input, a ring gear (211, 221), a first planet gear (212, 222), a second planet gear (214, 224), a second sun gear (215, 225), a carrier (213, 223) for rotatably supporting the first and second planet gears (212, 222; 214, 224) and an output connected to the ring gear (211, 221), the first and the second planet gears (212, 222; 214, 224) being arranged in such a way that the first planet gear (212, 222) is meshed with the first sun gear (210, 220) and the ring gear (211, 221) whereas the second planet gear (214, 224) is meshed with the first planet gear (212, 222) and the second sun gear (215, 225), the ring gear (221) of the secondary gear set (22) being connected to the output shaft, the carrier (213, 223) of each gear set (21, 22) being adapted to be locked to the housing (23) by a respective brake (C, G), each first sun gear (210, 220) of each gear set (21, 22) having a sun gear shaft (216, 226) which can be locked to the housing by means of another respective brake (B, F), said first sun gear of each gear set being connected with a respective forward clutch (A, E) for establishing a driving ratio from the input shaft to the output shaft and an additional reverse clutch (D) being provided to connect the input of one of the gear sets to the respective second sun gear, **characterised in that** the primary gear set (21) and the secondary gear set (22) are arranged in series within the housing (23) with the output of the primary gear set connected to the input of the secondary gear set, each gear set being capable of providing three distinct forward ratios and one of the gear sets being capable of providing a reverse ratio and wherein the primary gear set (21) and the secondary gear set (22) can be combined to provide three other distinct forward ratios and another reverse ratio.

2. A transmission as claimed in claim 1 in which the ring gear (211) of the primary gear set (21) is connectable to the first sun gear (220) or/and the second sun gear (225) of the secondary gear set (22) by means of the forward clutch (E) and the reverse clutch (D).

3. A transmission as claimed in claim 2 in which the first sun gear (210) and the second sun gear (215) of the primary gear set (21) have a first sun gear shaft (216) and a second sun gear shaft (217) respectively and in that the first sun gear shaft (216) is connectable to the second sun gear shaft (217) by means of one of the said forward clutch (A).

4. A transmission as claimed in claim 3 in which the second sun gear shaft (217) of the primary gear set (21) is connected to the input shaft (11).

## Patentansprüche

1. Automatikgetriebe (10) für ein Kraftfahrzeug, wobei das Getriebe (10) eine Eingangswelle (11), die mit einem Motor in Eingriff gebracht werden kann, und eine Ausgangswelle (12), die mit mindestens einer Fahrzeugachse und einem mit mehreren Schaltelementen versehenen Schaltgetriebezug in Eingriff gebracht werden kann, aufweist, wobei der Schaltgetriebezug zwischen der Eingangswelle und der Ausgangswelle in einem Gehäuse (23) angeordnet ist, wobei der Schaltgetriebezug zwei Ravigneaux-Zahnradsätze enthält, die als Primärradsatz (21) bzw. Sekundärradsatz (22) bezeichnet werden, wobei jeder Radsatz (21, 22) einen Eingang (11, 211), ein erstes Sonnenrad (210, 220), das mit ihrem Eingang verbunden werden kann, ein Hohlrad (211, 221), ein erstes Umlaufrad (212, 222), ein zweites Umlaufrad (214, 224), ein zweites Sonnenrad (215, 225), einen Träger (213, 223) zum drehbaren Abstützen des ersten und des zweiten Umlaufrads (212, 222; 214, 224) und einen Ausgang, der mit dem Hohlrad (211, 221) verbunden ist, aufweist, wobei das erste und das zweite Umlaufrad (212, 222; 214, 224) so angeordnet sind, dass das erste Umlaufrad (212, 222) mit dem ersten Sonnenrad (210, 220) und dem Hohlrad (211, 221) kämmt, während das zweite Umlaufrad (214, 224) mit dem ersten Umlaufrad (212, 222) und dem zweiten Sonnenrad (215, 225) kämmt, wobei das Hohlrad (221) des zweiten Radsatzes (22) mit der Ausgangswelle verbunden ist, wobei der Träger (213, 223) jedes Radsatzes (21, 22) dazu ausgeführt ist, durch eine jeweilige Bremse (C, G) mit dem Gehäuse (23) verriegelt zu werden, wobei jedes erste Sonnenrad (210, 220) jedes Radsatzes (21, 22) eine Sonnenradwelle (216, 226) aufweist, die mittels einer anderen jeweiligen Bremse (B, F) mit dem Gehäuse verriegelt werden kann, wobei das erste Sonnenrad jedes Radsatzes mit einer jeweiligen Vorwärtskupplung (A, E) verbunden ist, um ein Antriebsverhältnis von der Eingangswelle zur Ausgangswelle zu erzeugen, und mit einer zusätzlichen Rückwärtskupplung (D), die zur Verbindung des Eingangs eines der Zahnradsätze mit dem jeweiligen zweiten Sonnenrad vorgesehen ist, **dadurch gekennzeichnet, dass** der Primärradsatz (21) und der Sekundärradsatz (22) in dem Gehäuse (23) in Reihe angeordnet sind, wobei der Ausgang des Primärradsatzes mit dem Eingang des Sekundärradsatzes verbunden ist, wobei jeder Radsatz drei verschiedene Vorwärtsübersetzungen bereitstellen kann und einer der Zahnradsätze ein Rückwärtsverhältnis bereitstellen kann, und wobei der Primärradsatz (21) und der Sekundärradsatz (22) zur Bereitstellung von drei anderen verschiedenen Vorwärtsübersetzungen und einer anderen Rückwärtsübersetzung kombiniert werden können.

2. Getriebe nach Anspruch 1, wobei das Hohlrad (211) des Primärradsatzes (21) mittels der Vorwärtskupplung (E) und der Rückwärtskupplung (D) mit dem ersten Sonnenrad (220) und/oder dem zweiten Sonnenrad (225) des Sekundärradsatzes (22) verbunden werden kann.

3. Getriebe nach Anspruch 2, wobei das erste Sonnenrad (210) und das zweite Sonnenrad (215) des Primärradsatzes (21) eine erste Sonnenradwelle (216) bzw. eine zweite Sonnenradwelle (217) aufweisen und die erste Sonnenradwelle (216) mittels einer der Vorwärtskupplungen (A) mit der zweiten Sonnenradwelle (217) verbunden werden kann.

4. Getriebe nach Anspruch 3, wobei die zweite Sonnenradwelle (217) des Primärradsatzes (21) mit der Eingangswelle (11) verbunden ist.

## Revendications

1. Transmission automatique (10) pour un véhicule automobile, la transmission (10) ayant un arbre d'entrée (11) qui peut s'engager avec un moteur, un arbre de sortie (12) qui peut s'engager avec au moins un essieu de véhicule et un train d'engrenages de sélection pourvu de plusieurs éléments de sélection, le train d'engrenages de sélection étant agencé entre l'arbre d'entrée et l'arbre de sortie dans un boîtier (23), le train d'engrenages de sélection comportant deux jeux d'engrenages de Ravigneaux, appelés jeu d'engrenages primaire (21) et jeu d'engrenages secondaire (22), respectivement, chaque jeu d'engrenages (21, 22) ayant une entrée (11, 211), un premier engrenage solaire (210, 220) pouvant être connecté à leur entrée, un engrenage annulaire (211, 221), un premier engrenage planétaire (212, 222), un deuxième engrenage planétaire (214, 224), un deuxième engrenage solaire (215, 225), un support (213, 223) pour supporter à rotation les premier et deuxième engrenages planétaires (212, 222 ; 214, 224) et une sortie connectée à l'engrenage annulaire (211, 221), les premier et deuxième engrenages planétaires (212, 222 ; 214, 224) étant agencés de telle sorte que le premier engrenage planétaire (212, 222) s'engrène avec le premier engrenage solaire (210, 220) et l'engrenage annulaire (211, 221), tandis que le deuxième engrenage planétaire (214, 224) s'engrène avec le premier engrenage planétaire (212, 222) et le deuxième engrenage solaire (215, 225), l'engrenage annulaire (221) du jeu d'engrenages secondaire (22) étant connecté à l'arbre de sortie, le support (213, 223) de chaque jeu d'engrenages (21, 22) étant prévu pour être verrouillé au boîtier (23) par un frein respectif (C, G), chaque premier engrenage solaire (210, 220) de chaque jeu d'engrenages (21, 22) ayant un arbre d'engrenage solaire (216, 226) qui peut être verrouillé au boîtier au moyen d'un autre frein respectif (B, F), ledit premier engrenage solaire de chaque jeu d'engrenages étant connecté à un embrayage avant respectif (A, E) pour établir un rapport d'entraînement de l'arbre d'entrée à l'arbre de sortie et un embrayage arrière supplémentaire (D) étant prévu pour connecter l'entrée de l'un des jeux d'engrenages au deuxième engrenage solaire respectif, **caractérisée en ce que** le jeu d'engrenages primaire (21) et le jeu d'engrenages secondaire (22) sont agencés en série dans le boîtier (23), la sortie du jeu d'engrenages primaire étant connectée à l'entrée du jeu d'engrenages secondaire, chaque jeu d'engrenages étant capable de fournir trois rapports distincts avant et l'un des jeux d'engrenages étant capable de fournir un rapport arrière et le jeu d'engrenages primaire (21) et le jeu d'engrenages secondaire (22) pouvant être combinés pour fournir trois autres rapports distincts avant et un autre rapport arrière.

2. Transmission selon la revendication 1, dans laquelle l'engrenage annulaire (211) du jeu d'engrenages primaire (21) peut être connecté au premier engrenage solaire (220) et/ou au deuxième engrenage solaire (225) du jeu d'engrenages secondaire (22) au moyen de l'embrayage avant (E) et de l'embrayage arrière (D).

3. Transmission selon la revendication 2, dans laquelle le premier engrenage solaire (210) et le deuxième engrenage solaire (215) du jeu d'engrenages primaire (21) ont un premier arbre d'engrenage solaire (216) et un deuxième arbre d'engrenage solaire (217), respectivement, et en ce que le premier arbre d'engrenage solaire (216) peut être connecté au deuxième arbre d'engrenage solaire (217) au moyen de l'un desdits embrayages avant (A).

4. Transmission selon la revendication 3, dans laquelle le deuxième arbre d'engrenage solaire (217) du jeu d'engrenages primaire (21) est connecté à l'arbre d'entrée (11).
